# EUROPEAN PATENT SPECIFICATION

(11) **EP 2 556 739 B1**
(45) Date of publication and mention of the grant of the patent: **08.10.2014**
(21) Application number: 12179270.9
(22) Date of filing: 03.08.2012
(51) Int. Cl.: A01D 34/68, A01D 34/78, A01D 69/02

(54) **Electrical connection device for battery**
Elektrische Verbindungsvorrichtung für Batterie
Dispositif de connexion électrique pour batterie.

(30) Priority: 08.08.2011 IT MI20111511
(43) Date of publication of application: 13.02.2013
(73) Proprietor: GGP Italy S.p.A., 31033 Castelfranco Veneto (TV) (IT)
(72) Inventor: Gatto, Carla, 30037 Scorze' VE (IT); Puppin, Marco, 30027 S. Dona' di Piave VE (IT); Bastasin, Franco, 31100 Treviso (IT)
(74) Representative: Mittler, Enrico

(56) References cited:
- EP-A1- 2 111 735
- EP-A1- 2 299 516
- WO-A2-2008/015479
- US-A- 5 402 626
- US-A- 5 937 623

## Description

The present invention relates to a connection device for an electrical supply battery in a machine for trimming lawns and gardens.

Generally, a machine for trimming lawns and gardens is a mower capable of carrying out the cutting of the weeds, the trimming and mulching of the grass by means of a rotating blade, pivoted to the center line, having sharp edges on some of the segment. Moreover, the rotating blade is shaped so as to create a vacuum for drawing the cut grass, conveying it to a collection tank or disposing it outside the machine. The disposal outside the machine may take place after a treatment of shredding and pulverizing the volume of cut vegetal stems by means of a suitably shaped disk integrally connected to the rotating blade. In this way, the grass to be disposed of falls onto the ground, forming a layer of vegetal material scattered on the ground for protection or fertilization purpose.

Generally, a mower comprises a bearing frame made of plastic, steel sheet or die-cast aluminum, supported by wheels, manually pushed by means of a height adjustable handlebar, provided with a lever for controlling and starting a motor connected to the blade.

Preferably, the mower comprises an electrical motor directly connected to the rotating blade and supplied by a rechargeable battery located in a compartment obtained in the bearing frame. The mower operates by means of particular sensors connected to a microprocessor, integrated to a program formed by a sequence of instructions which controls and manages the electrical power and the electrical motor operating modes.

Preferably, the rechargeable battery is a lithium ion accumulator of the type extractable from the compartment obtained in the bearing frame of the mower. The rechargeable battery is electrically connected to the electrical motor by means of an electrical connector, formed by a male connector and the corresponding female connector, steadily connected by mechanical operations. Generally, the female connector is integral to the rechargeable battery and the male connector is connected to the electrical motor by a cable. Preferably, the electrical connector is of the type comprising metal conductive plates, integral to the rechargeable battery and to the battery compartment, respectively, steadily connected by a pressure acting between the exposed surfaces in reciprocal contact.

The rechargeable battery slides along inclined linear guides which ensure the electrical connection by mechanically guiding the electrical contacts of the battery against the electrical contacts of the motor. The battery weight component acting parallel to the inclined linear guides favors the connection by gravity.

Generally, mechanical means are seated within the mower compartment for steadily locking the electrical connector that connects the rechargeable battery to the electrical motor. Said mechanical means comprise an articulated lever system manually actuable or connected to the cover, which by closing, actuates a mechanical stop pressing in a point of the rechargeable battery, locking it. By opening the cover, the mechanical stop releases the battery, allowing the extraction thereof necessary for recharging through the connection to the mains.

The object of the present invention relates to a particular electrical connection device between the rechargeable battery and the electrical motor.

EP-2299516 describes an electrical connection device between a battery and an electrical motor of a mower.

An object of the present invention is to ensure the electrical connection between the rechargeable battery and the electrical motor while the mower is working on an uneven and rough ground, even with strong inclinations, in presence of considerable vibrations and shocks, and with an inclined position.

A further object is to ensure the easiness of extraction and insertion of the rechargeable battery into the compartment obtained in the bearing frame of the mower, through simple mechanical operations carried out manually.

A further object is to be able to easily install the new device into the compartment obtained in the mower frame, intervening both on a new fleet and on an existing fleet.

The above and other objects and advantages of the invention, as will appear from the following description, are achieved with a device for the electrical connection between a battery and an electrical motor as that described in claim 1.

Preferred embodiments and non ordinary variants of the present invention are the object of the dependent claims.

The present invention shall be better described through some preferred embodiments thereof, given by way of a non-limiting example, with reference to the appended drawings, wherein:
FIG. 1 shows an axonometric view of a mower equipped with a device for the electrical connection between a rechargeable battery and an electrical motor object of the invention;
FIG. 2 and FIG. 3 show an axonometric view of a body of the mower, without rechargeable battery, with and without cover, respectively;
FIG. 4 and FIG. 5 show an axonometric view of the body of the mower, with locked rechargeable battery, with and without cover, respectively;
FIG. 6 and FIG. 7 show an axonometric and a cutaway view of an enlargement of a compartment obtained in the body of the mower, with locked rechargeable battery and without cover;
FIG. 8 shows an axonometric view of the cutaway view of an enlargement of the compartment obtained in the body of the mower, with locked rechargeable battery and with open cover;
FIG. 9 shows a side view of the cutaway view of an enlargement of the compartment obtained in the body of the mower, with locked rechargeable battery and with closed cover;

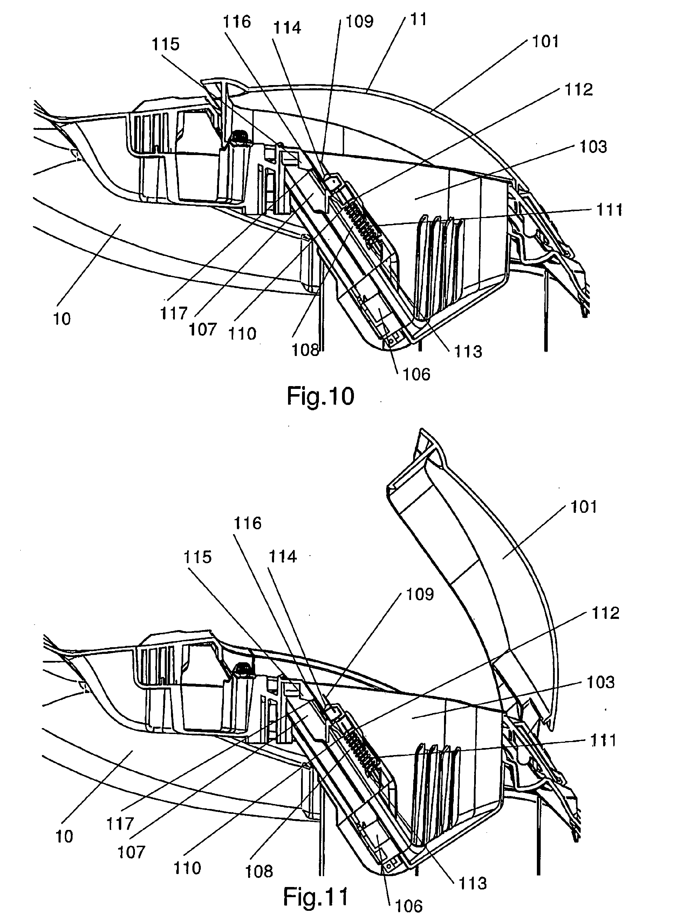

FIG. 10 and FIG. 11 show a side sectional view of an enlargement of the compartment obtained in the body of the mower without rechargeable battery, with closed and open cover, respectively;
FIG. 12 shows a side view of an enlargement of the compartment obtained in the body of the mower, with rechargeable battery removed from its seat and with open cover;
FIG. 13 shows a plan view according to direction XIII of FIG. 12 depicting the bottom of the rechargeable battery wherein conductive plates are applied;
FIG. 14 shows an enlarged detail XIV of FIG. 13 depicting a conductive plate applied to the bottom of the rechargeable battery;
FIG. 15 shows a side view of an enlargement of the compartment obtained in the body of the mower, with half-locked rechargeable battery, without cover;
FIG. 16 shows a side view of an enlargement of the compartment obtained in the body of the mower, with released rechargeable battery, without cover.

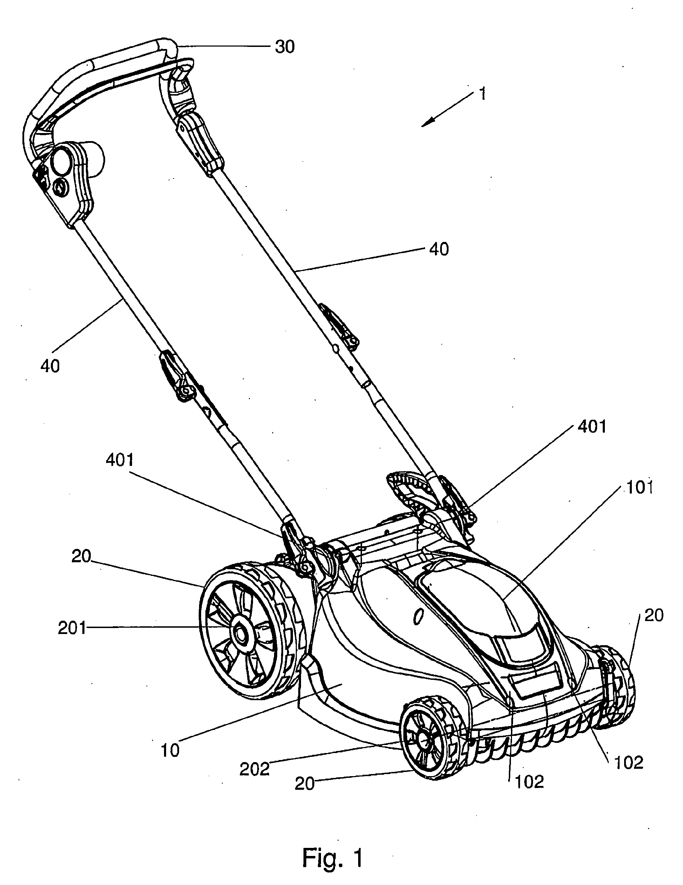

With reference to figure 1, a mower 1 substantially comprises a body 10 supported by wheels 20 and connected to a handlebar 30 through a pair of telescopic rods 40.

Body 10 is made of plastic, for example in two pieces, and is provided with an opening cover 101 by means of a hinge 102. Wheels 20 are keyed on a pair of axes 201 and 202 connected to the chassis of body 10. The pair of telescopic rods 40 is pivoted to the top of body 10 by means of a pair of hinges 401, of the friction type for keeping the position of handlebar 30 locked with respect to the ground or to lift or lower it without effort.

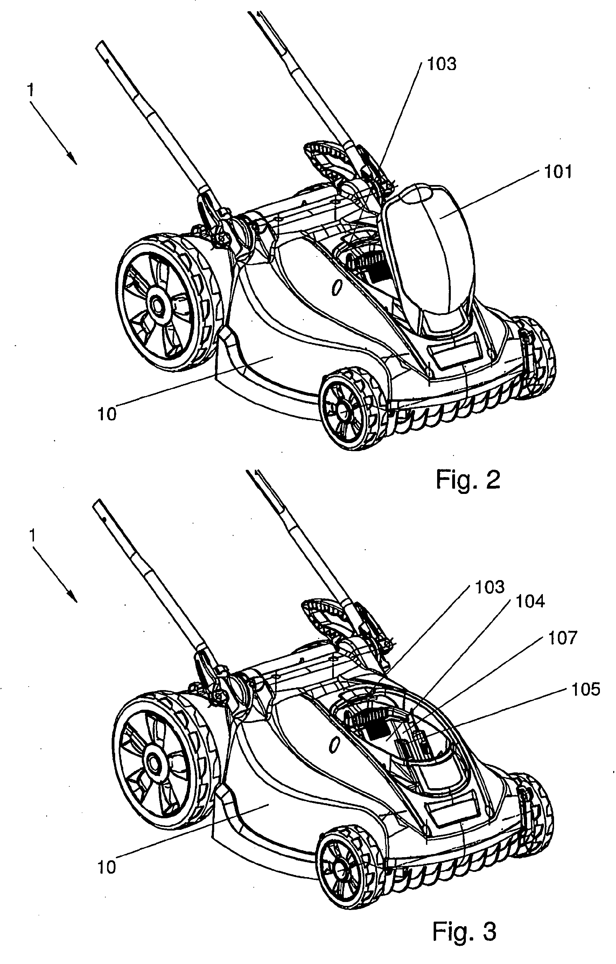

In figures 2 and 3, a central compartment 103 is obtained in body 10 in a symmetrical position with respect to the center line axis of mower 1, occupying the lower space corresponding to the opening cover 101.

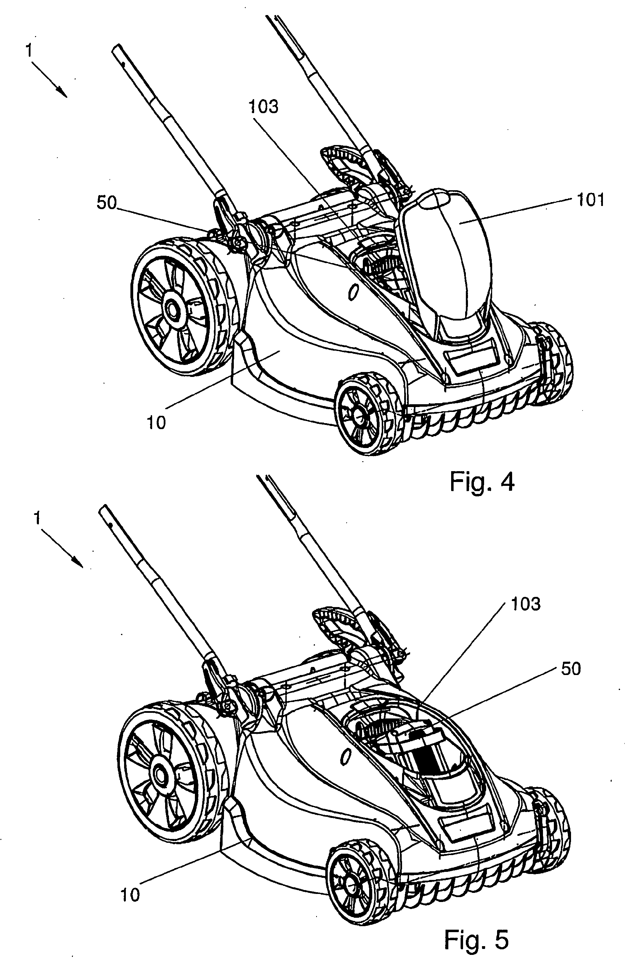

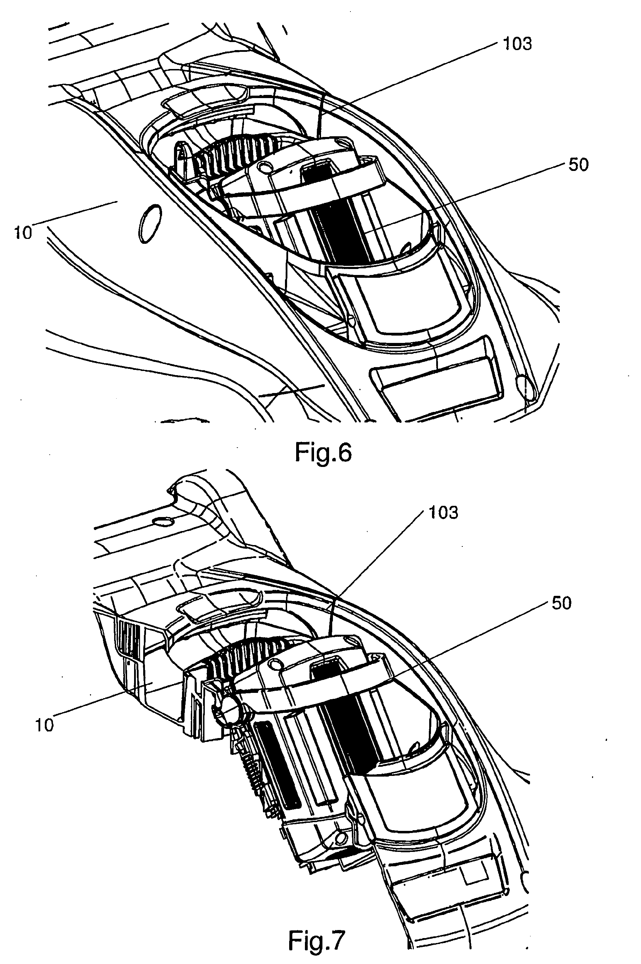

In figures 4 to 9, a rechargeable battery 50 is installed within compartment 103, electrically connected to an electrical motor (not shown) seated within a compartment obtained in body 10 adjacent the central compartment 103. The electrical motor is directly connected to a rotating blade (not shown) operating in a cavity obtained in body 10, the bottom whereof adjacent the ground is open.

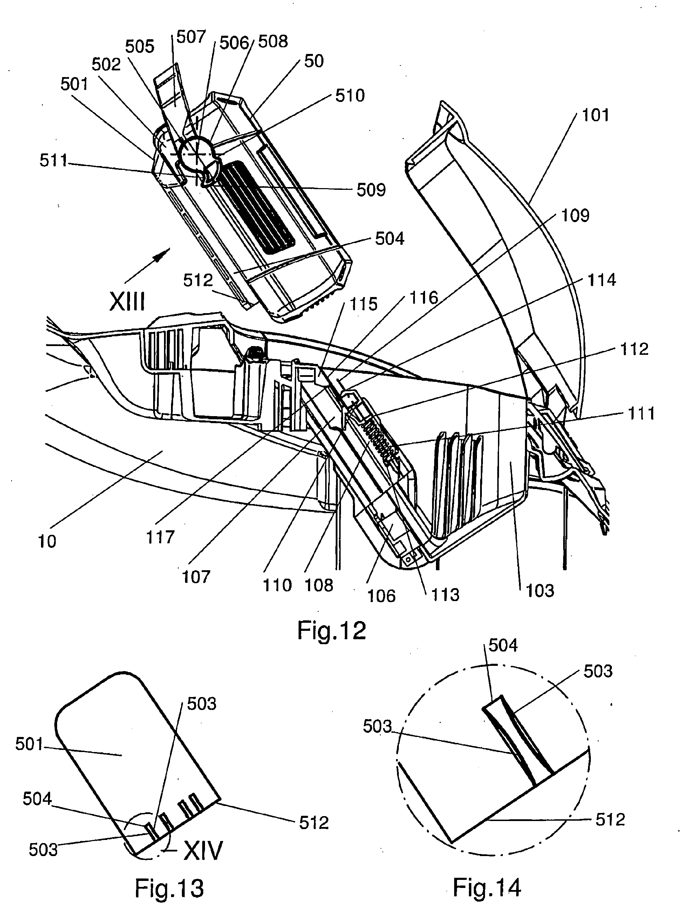

In figures 12 and 13, the rechargeable battery 50 is of the type comprising a rectangular flat base 501, carrying a pair of positive and negative electrical contacts connected to the respective electrodes, and a parallelepiped 502, containing the charging cell assembly. The positive and negative electrical contacts are formed by metal conductive plates 503, projecting from side grooves 504 open on a bottom side 512 belonging to the rectangular flat base 501.

A pair of coaxial eccentric cams 505 rotates with respect to a transversal axis passing by a point 506, adjacent the head of parallelepiped 502, by means of a lever 507 occupying a space around the upper base of parallelepiped 502. The coaxial eccentric cams 505 are formed by a circular profile 508 and a lobe 509, a recess 510 and one 511 jointing the circular profile 508 with respect to lobe 509.

In figure 3, an inclined front surface 104 at the bottom delimits the interior of the central compartment 103 obtained in body 10 and seats a pair of linear guides 105, projecting from the inclined surface 104. In figure 12, the bottom of the inclined front surface 104 houses positive and negative contacts formed by metal conductive plates 106 suitably connected to the internal circuitry of the electrical motor. A pair of uprights 107, laterally delimiting the sides of the inclined front surface 104, seats a cavity 108 along an inclined axis 109. A pin 110 slides along cavity 108, opposed by a cylindrical elastic compression spring 111 pressing on an abutment 112, at the head of pin 110, and on a collar 113, integral with each upright 107. The head of pin 110 has a cusp shape jointed by a curved surface 114. A shelf 115, integral with each upright 107, is delimited at the top by a sliding surface 116, parallel to the inclined linear guides 105, and jointed by a curved surface 117.

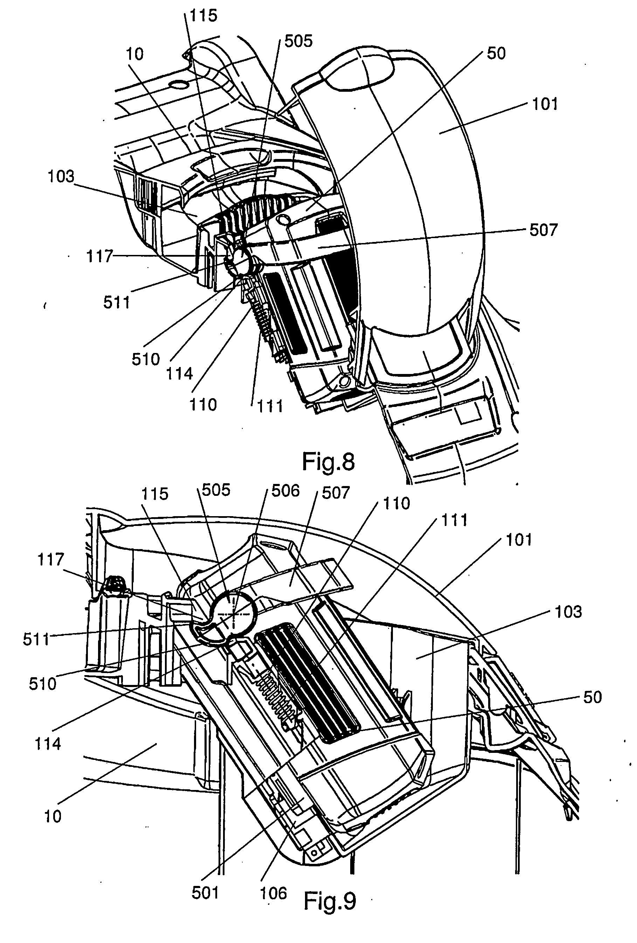

In figure 9, the metal conductive plates 503 (not shown), belonging to the rectangular flat base 501 of the rechargeable battery 50, couple with the metal conductive plates 106, seated within the central compartment 103, establishing the electrical connection between the rechargeable battery 50 and the electrical motor. The metal conductive plates 503 can be selectively coupled with the metal conductive plates 106 by means of a mechanical device between the rectangular flat base 501 of the rechargeable battery 50 and the respective linear guides 105 projecting from the inclined surface 104 of the central compartment 103.

In figures 8 and 9, the pair of coaxial eccentric cams 505 is arranged so that recess 510 and recess 511 match the curved surface 114 of the head of pin 110 and the curved surface 117 belonging to shelf 115, respectively. Pins 110 lock lever 507 by means of the pair of coaxial eccentric cams 505, integral to lever 507 and pressing against shelves 115 fixed to compartment 103. In this way, the rechargeable battery 50 is locked, ensuring the electrical connection with the electrical motor.

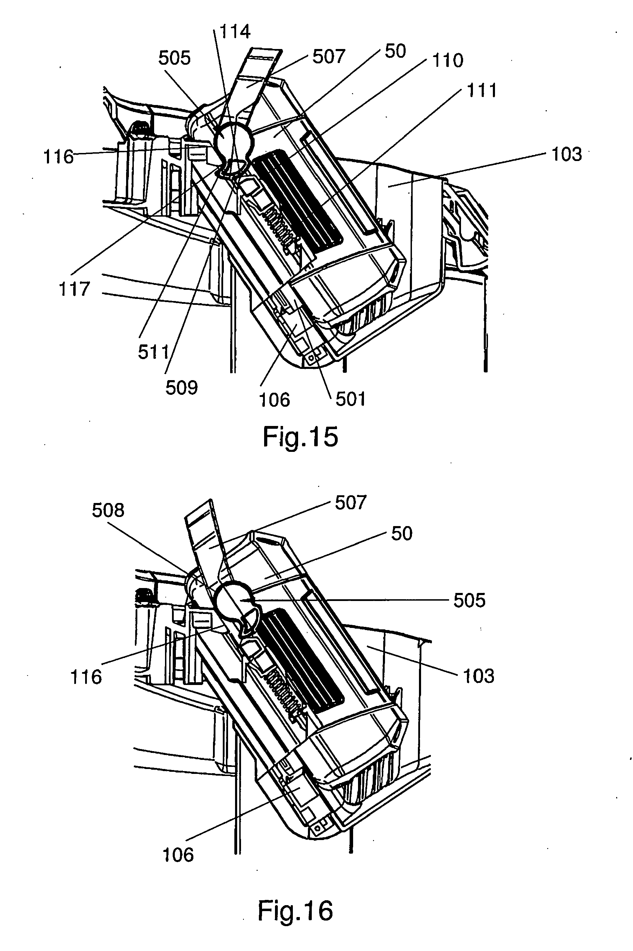

In figure 15, the metal conductive plates 503 (not shown) are disconnected from the metal conductive plates 106, by the effect of the sliding of the rectangular flat base 501, of the rechargeable battery 50 along the respective linear guides 105, integral with the central compartment 103, induced by the counter-clockwise rotation of lever 507 with respect to an axis passing by a point around the coupling between recess 511 and the curved surface 117, pulling the rechargeable battery 50, moving it away from its seat in the central compartment 103. In the half-lock position of figure 15, the profile of lobe 509 of each coaxial eccentric cam 505, integral with lever 507, slides on the curved surface 114 of the head of each pin 110. In this way, the pair of springs 111 presses onto pins 110 that push cams 505 and thus battery 50 upwards, thereby releasing the rechargeable battery 50.

In figure 16, the further rotation in counter-clockwise direction of lever 507 pulls the rechargeable battery 50 upwards, by the effect of the rotation of the circular profile 508 belonging to each coaxial eccentric cam 505, along the inclined sliding surface 116, integral to the central compartment 103.

The electrical connection between the rechargeable battery 50 and the electrical motor of mower 1 is obtained by means of lever 507 rotatably connected to the rechargeable battery 50. Lever 507 locks the rechargeable battery 50 within compartment 103 through the coaxial eccentric cams 505. By pushing lever 507 upwards, the contact with pins 110 moves from recess 510 to lobe 509 of the coaxial cams 505, releasing the rechargeable battery 50 and moving it away from its seat (figure 15). By further rotating lever 507, the rechargeable battery 50 slides along the inclined sliding surface 116 allowing the extraction from the central compartment 103 (figure 16).

In order to insert and electrically couple the rechargeable battery 50 to the motor of mower 1 it is sufficient to set lever 507 to the position of figure 12, i.e. so to be above the head of battery 50; rest the lower side 512 of battery 50 onto guides 105 of compartment 103; slide battery 50 downwards until lobe 509 of cams 505 touches the head of pin 110 as shown in figure 16; rotate lever 507 in clockwise direction, said rotation causing a further lowering of battery 50 subsequent to the engagement of recess 511 with the curved surface 117 of shelf 115 (figure 15), up to reaching the lock and electrical connection position of figure 9. The release and removal of battery 50 takes place by repeating the above operations in the reverse order.

Advantageously, the electrical connection device between the rechargeable battery 50 and the electrical motor of mower 1 ensures the locking and the electrical connection of the battery within its seat during the operations in the presence of shocks and vibrations.

The use of a lever 507 connected to the rechargeable battery gives the mechanical device object of the invention a construction simplicity that makes it easily integrable in an existing mower.

## Claims

1. An electrical connection device between a battery (50) and an electrical motor of a mower (1), wherein electrical conductive means (503) belonging to the battery (50) selectively connect to respective electrical conductive means (106) of the mower (1) connected to the electrical motor, the battery (50) being provided with cam means (505), controlled by a lever (507), adapted to interact with pins (110) opposed by elastic means (111) seated in a compartment (103) of the body (10) of the mower (1), so as to make the battery (50) take a lock position wherein the battery (50) is electrically connected to the electrical motor of the mower (1) and a release position wherein the battery (50) is electrically disconnected from the electrical motor of the mower (1), the pair of coaxial eccentric cams (505), integral to the lever (507), being selectively adapted to press against shelves (115) fixed to the compartment (103), **characterized in that** each coaxial eccentric cam (505) is formed by a circular profile (508) and a lobe (509), a recess (510) and one (511) jointing the circular profile (508) with respect to the lobe (509), matching a curved surface (114) of the head of the pin (110) and a curved surface (117) belonging to the shelf (115), respectively.

2. A device according to claim 1, **characterized in that** with battery (50) electrically disconnected from the electrical motor but at least partly inserted in the compartment (103) of the mower (1), the pair of coaxial eccentric cams (505) presses against the pins (110) and against the shelves (115) by means of the lobe (509) and of the recess (511), respectively.

3. A device according to claim 1, **characterized in that** with battery (50) electrically disconnected from the electrical motor but at least partly inserted in the compartment (103) of the mower (1), the pair of coaxial eccentric cams (505) presses against the pins (110) and against the shelves (115) by means of the lobe (509) and of the circular profile (508), respectively.

4. A device according to one of the preceding claims 2 and 3, **characterized in that** pushing the lever (507) upwards, the contact between the coaxial eccentric cams (505) and the pins (110) moves from the recess (510) to the lobe (509), releasing the lever (507) and electrically disconnecting the battery (50) from the electrical motor.

## Patentansprüche

1. Eine elektrische Verbindungsvorrichtung zwischen einer Batterie (50) und einem Elektromotor eines Mähers (1),
wobei elektrisch leitende Mittel (503), die zu der Batterie (50) gehören, selektiv mit entsprechenden elektrisch leitenden Mitteln (106) des Mähers (1) verbunden werden, die mit dem Elektromotor verbunden sind,
die Batterie (50) mit einem Exzentermittel (505) versehen ist, das über einen Hebel (507) gesteuert wird und daran angepasst ist, mit Stiften (110) zu wechselwirken entgegen elastischen Mitteln (111), die in einem Fach (103) des Körpers (10) des Mähers (1) sitzen, um die Batterie (50) eine Verriegelungsstellung einnehmen zu lassen, in der die Batterie (50) elektrisch mit dem Elektromotor des Mähers (1) verbunden ist, und eine Entriegelungsstellung, in der die Batterie (50) elektrisch von dem Elektromotor des Mähers (1) getrennt ist,
wobei das Paar koaxialer exzentrischer Nocken (505), die integral mit dem Hebel (507) sind, selektiv daran angepasst sind, gegen Borde (115) zu drücken, die an dem Fach (103) befestigt sind,
**dadurch gekennzeichnet, dass**
jeder koaxiale exzentrische Nocken (505) durch ein kreisförmiges Profil (508) und eine Nase (509) gebildet ist,
eine Vertiefung (510) und eine (511), die das kreisförmiges Profil (508) mit der Nase (509) verbinden, jeweils zusammenpassend sind mit einer gekrümmten Oberfläche (114) des Kopfes des Stifts (110) und einer gekrümmten Oberfläche (117), die zu dem Bord (115) gehört.

2. Eine Vorrichtung gemäß Anspruch 1, **dadurch gekennzeichnet, dass**, wenn die Batterie (50) elektrisch von dem Elektromotor getrennt, aber zumindest teilweise in das Fach (103) des Mähers (1) eingesetzt ist, das Paar koaxialer exzentrischer Nocken (505) jeweils mittels der Nase (509) und der Vertiefung (511) gegen die Stifte (110) und gegen die Borde (115) drücken.

3. Eine Vorrichtung gemäß Anspruch 1, **dadurch gekennzeichnet, dass**, wenn die Batterie (50) elektrisch von dem Elektromotor getrennt, aber zumindest teilweise in das Fach (103) des Mähers (1) eingesetzt ist, das Paar koaxialer exzentrischer Nocken (505) jeweils mittels der Nase (509) und des kreisförmigen Profils (508) gegen die Stifte (110) und gegen die Borde (115) drücken.

4. Eine Vorrichtung gemäß einem der vorstehenden Ansprüche 2 und 3, **dadurch gekennzeichnet, dass** beim Drücken des Hebels (507) nach oben der Kontakt zwischen den koaxialen exzentrischen Nocken (505) und den Stiften (110) von der Vertiefung (510) zu der Nase (509) übergeht, den Hebel (507) freigibt und die Batterie (50) elektrisch von dem Elektromotor trennt.

## Revendications

1. Dispositif de connexion électrique entre une batterie (50) et un moteur électrique d'une tondeuse à gazon (1), dans lequel des moyens conducteurs électriques (503) appartenant à la batterie (50) se connectent sélectivement aux moyens conducteurs électriques (106) respectifs de la tondeuse à gazon (1) raccordés au moteur électrique, la batterie (50) étant prévue avec des moyens de came (505), commandés par un levier (507), adaptés pour interagir avec des broches (110) contrastées par des moyens élastiques (111) assis dans un compartiment (103) du corps (10) de la tondeuse à gazon (1) afin de faire prendre à la batterie (50) une position de blocage, dans laquelle la batterie (50) est électriquement connectée au moteur électrique de la tondeuse à gazon (1) et une position de déblocage dans laquelle la batterie (50) est électriquement déconnectée du moteur électrique de la tondeuse (1), la paire de cames excentriques coaxiales (505), solidaires du levier (507), étant sélectivement adaptées pour appuyer contre des consoles (115) fixées sur le compartiment (103), **caractérisé en ce que** chaque came excentrique (505) est formée par un profil circulaire (508) et un lobe (509), un évidement (510) et un évidement (511) assemblant le profil circulaire (508) par rapport au lobe (509), correspondant à une surface incurvée (114) de la tête de la broche (110) et une surface incurvée (117) appartenant à la console (115), respectivement.

2. Dispositif selon la revendication 1, **caractérisé en ce que**, avec la batterie (50) électriquement déconnectée du moteur électrique mais au moins partiellement insérée dans le compartiment (103) de la tondeuse à gazon (1), la paire de cames excentriques coaxiales (505) appuie contre les broches (110) et contre les consoles (115) au moyen du lobe (509) et de l'évidement (511), respectivement.

3. Dispositif selon la revendication 1, **caractérisé en ce que**, avec la batterie (50) électriquement déconnectée du moteur électrique mais au moins partiellement insérée dans le compartiment (103) de la tondeuse (1), la paire de cames excentriques coaxiales (505) appuie contre les broches (110) et contre les consoles (115) au moyen du lobe (509) et du profil circulaire (508), respectivement.

4. Dispositif selon l'une des revendications 2 et 3, **caractérisé en ce que**, en poussant le levier (507) vers le haut, le contact entre les cames excentriques coaxiales (505) et les broches (110) passe de l'évidement (510) au lobe (509), libérant le levier (507) et déconnectant électriquement la batterie (50) du moteur électrique.
